# FASCICULE DE BREVET EUROPEEN

(11) **EP 2 170 695 B1**
(45) Date de publication et mention de la délivrance du brevet: **17.10.2012**
(21) Numéro de dépôt: 08826739.8
(22) Date de dépôt: 23.07.2008
(51) Int. Cl.: B63H 21/20

(54) **GROUPE MOTEUR POUR NAVIRE**
SCHIFFSANTRIEBSEINHEIT
POWER UNIT FOR SHIPS

(30) Priorité: 26.07.2007 FR 0756748
(43) Date de publication de la demande: 07.04.2010
(73) Titulaire: DCNS, 75015 Paris (FR)
(72) Inventeur: JODET, Lionel, F-44200 Nantes (FR)
(74) Mandataire: Domenego, Bertrand
(86) Numéro de dépôt international: PCT/FR2008/051381
(87) Numéro de publication internationale: WO 2009/016313

(56) Documents cités:
- US-A- 5 616 056

## Description

La présente invention concerne un groupe moteur pour l'entraînement d'au moins une ligne d'arbres d'une ligne de propulsion d'un navire, et en particulier d'un navire militaire du type multi-missions.

Les navires militaires multi-missions tels que les frégates multi-missions, sont des navires destinés à remplir d'une part des missions telles que la lutte anti-navires ou des actions à terre et d'autre part des missions du type lutte anti-sous-marine. Pour ces deux types de missions, de tels navires nécessitent des moyens de propulsion ayant des caractéristiques très différentes. En effet, pour les premières missions, le navire nécessite des moyens de propulsion très puissants lui permettant d'atteindre des vitesses élevées mais pour lesquels les exigences de discrétion acoustique ne sont pas fondamentales. En revanche, pour les deuxièmes types de mission, le navire nécessite des puissances de propulsion beaucoup plus faibles puisque les vitesses auxquelles sont effectuées les missions de lutte anti-sous-marine sont sensiblement plus faibles que les vitesses auxquelles sont effectuées les missions de lutte anti-navire, en outre de telles missions nécessitent une discrétion acoustique importante.

Afin de propulser de tels navires multi-missions, on a proposé d'utiliser des groupes moteur hybride pour l'entraînement des lignes d'arbres de la ligne de propulsion du navire, constitués d'un moteur thermique puissant pour assurer la propulsion à vitesse élevée, couplé avec un ou plusieurs moteurs électriques moins puissants permettant d'assurer la propulsion à plus faible vitesse avec une très bonne discrétion acoustique. En particulier, on a proposé des groupes moteur hybride dans lesquels les moteurs électriques sont disposés en bout d'arbre en amont du moteur thermique. Cette disposition présente l'inconvénient d'augmenter sensiblement l'encombrement du groupe moteur et donc de réduire la place disponible dans le navire pour remplir ses autres missions opérationnelles. Cette disposition présente également l'inconvénient de ne pas permettre de découpler le moteur électrique du moteur thermique tout en conservant la capacité de propulsion du moteur électrique. Il en résulte notamment que, si on souhaite que le navire soit équipé d'un groupe moteur ayant une certaine résistance aux chocs, il est nécessaire de prévoir un groupe moteur thermique résistant aux chocs, ce qui peut conduire à des dimensionnements considérables d'un tel dispositif.

Afin de remédier à ces inconvénients, on a proposé de disposer le moteur électrique en aval du moteur thermique, en l'insérant dans la ligne d'arbres entre deux accouplements. Cette disposition présente cependant plusieurs inconvénients. Tout d'abord, elle conduit à surdimensionner les accouplements du moteur électrique qui doivent être capables de passer non seulement la puissance du moteur électrique mais aussi celle du moteur thermique qui est beaucoup plus importante. Ensuite, la tenue aux chocs de la ligne de propulsion ne peut être obtenue qu'en prévoyant des équipements qui tous sont adaptés à la résistance aux chocs. En effet, la résistance aux chocs pourrait être obtenue en prévoyant des accouplements élastiques et en montant le moteur électrique sur des supports élastiques, mais cette disposition conduirait à des instabilités vibratoires inacceptables.

Le document US 5616056, qui est considéré comme étant l'état de la technique le plus proche, décrit un tel dispositif. Par groupe moteur hybride on entend un groupe moteur comprenant un groupe moteur principal et au moins un groupe moteur secondaire couplé au groupe moteur principal ; le groupe moteur principal utilisant une énergie éventuellement différente de l'énergie utilisée par le ou les groupes moteurs secondaires.

Par la suite l'expression "groupe moteur", sans autre qualificatif désignera un groupe moteur hybride.

Le but de la présente invention est de remédier à ces inconvénients en proposant un groupe moteur hybride pour l'entraînement d'au moins d'une ligne d'arbres d'une ligne de propulsion d'un navire qui soit peu encombrant et dont la partie propulsion électrique soit résistante aux chocs sans qu'il soit nécessaire d'utiliser des moteurs spécialement conçus à cet effet.

A cet effet, l'invention a pour objet un groupe moteur hybride pour l'entraînement d'au moins une ligne d'arbres d'une ligne de propulsion d'un navire, du type comprenant un groupe moteur principal, au moins un groupe moteur secondaire et au moins un arbre de sortie accouplé au moteur principal et à un groupe moteur secondaire. Le groupe moteur principal et un groupe moteur secondaire accouplés à un arbre de sortie sont accouplés en parallèle, le groupe moteur principal étant accouplé par l'intermédiaire d'un moyen d'accouplement débrayable et le groupe moteur secondaire étant accouplé par l'intermédiaire d'un moyen d'accouplement élastique.

De préférence, le groupe moteur secondaire comprend un arbre d'entraînement comportant un alésage axial de diamètre interne supérieur au diamètre externe de l'arbre de sortie, l'arbre de sortie est coaxial à l'arbre d'entraînement et s'étend à l'intérieur de l'alésage de l'arbre d'entraînement, et le moyen d'accouplement élastique du groupe moteur secondaire et de l'arbre de sortie est monté à l'une des extrémités de l'arbre d'entraînement du groupe moteur secondaire.

De préférence, le groupe moteur secondaire est monté sur un dispositif de suspension élastique et le diamètre intérieur de l'alésage axial de l'arbre d'entraînement du groupe moteur secondaire est adapté pour laisser entre l'arbre de sortie et l'arbre d'entraînement un jeu supérieur ou égal au débattement du dispositif de suspension.

Le groupe moteur secondaire comprend par exemple au moins un moteur électrique et l'arbre d'entraînement du groupe moteur secondaire constitue l'axe de rotation du moteur électrique.

De préférence, l'accouplement débrayable du groupe moteur principal à l'arbre de sortie est disposé entre le groupe moteur principal et l'accouplement élastique du groupe moteur secondaire et de l'arbre de sortie.

Le groupe moteur peut comprendre deux arbres de sortie accouplée en parallèle au groupe moteur principal et accouplés chacun à un groupe moteur secondaire.

L'invention concerne également un navire, notamment un navire à usage militaire, équipé d'un groupe moteur selon l'invention.

L'invention va maintenant être décrite de façon plus précise mais non limitative en regard des figures annexées dans laquelle :
- la figure 1 est une vue schématique en coupe de profil d'un navire équipé d'une ligne de propulsion entraînée par un groupe moteur hybride ;
- la figure 2 est une vue de dessus schématique de la ligne de propulsion de la figure 1 ;
- la figure 3 est une vue en coupe du montage du moteur électrique d'un groupe moteur hybride prévu pour l'entraînement d'une ligne d'arbre d'une ligne de propulsion d'un navire.

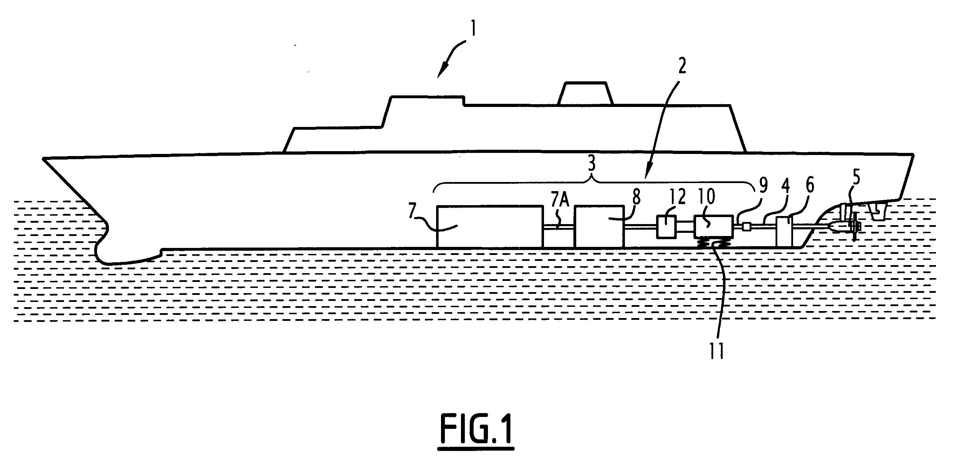

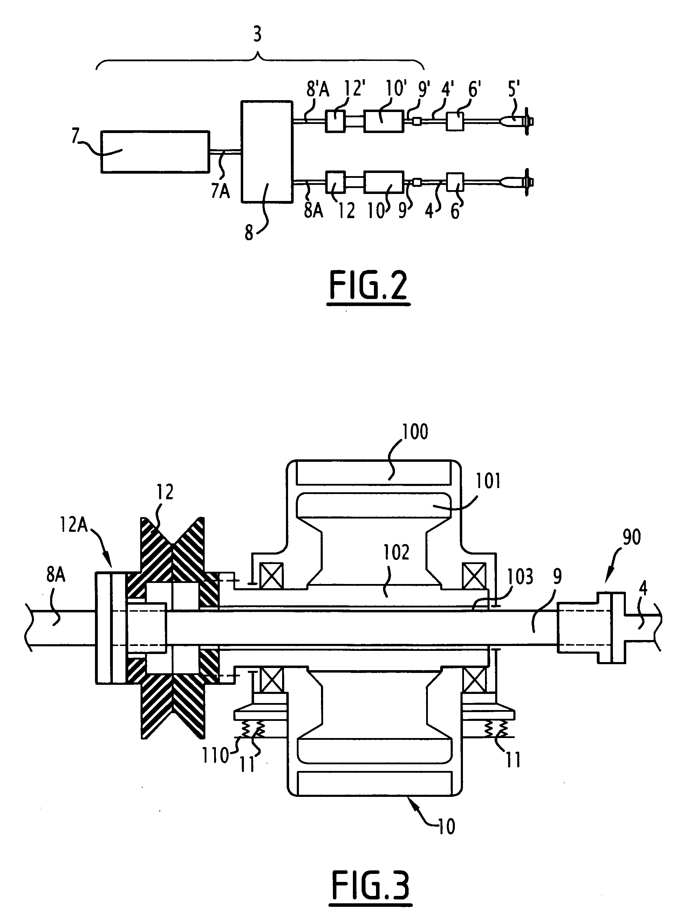

Le navire repéré généralement par 1 à la figure 1 est équipé d'une ligne de propulsion repérée généralement par 2 et qui est constitué d'un groupe moteur hybride 3 qui entraîne une ligne d'arbre 4 qui porte une hélice 5 et qui est supportée par une butée 6 qui sert à transmettre l'effort de poussée de l'hélice 5 à la structure du navire. Sur la figure 1, on ne voit qu'une ligne d'arbre. Mais comme représenté à la figure 2, en général le groupe moteur hybride 3 comporte un groupe moteur principal constitué d'un moteur thermique puissant 7 qui entraîne un réducteur 8 qui entraîne lui-même deux lignes d'arbres distinctes 4 et 4' par l'intermédiaire de deux montages comportant deux groupes moteurs secondaires constitués de deux moteurs électriques distincts 10 et 10'. Sur cette ligne de propulsion du navire, le moteur thermique 7 est un moteur de forte puissance qui permet par exemple pour une frégate d'atteindre une vitesse de l'ordre de 27 noeuds, alors que les deux moteurs électriques 10 et 10' sont des moteurs de beaucoup plus faible puissance et qui permettent simplement à la frégate de naviguer à des vitesses de l'ordre de 16 noeuds. Ces moteurs électriques moins puissants que le moteur thermique ont l'avantage en revanche d'être beaucoup plus silencieux.

Le groupe de moteur hybride 3 tel qu'il vient d'être décrit comprend donc un groupe moteur principal 7 et deux groupes moteur secondaire 10 et 10'. Ce groupe moteur hybride comporte deux arbres de sortie 9 et 9' accouplés chacun d'une part au groupe moteur principal 7 par l'intermédiaire du réducteur 8 et à un groupe moteur secondaire 10, et d'autre part à une ligne d'arbre porte-hélice 4 ou 4'. Les deux groupes moteurs secondaires et leurs accouplements au groupe moteur principal ainsi qu'aux arbres porte-hélice étant identiques, on ne décrira que l'un de ces ensembles.

Comme on le voit sur les figures 1 et 2, le groupe moteur principal 7 comporte un arbre d'entraînement 7A qui est accouplé au réducteur 8 lequel comporte deux arbres d'entraînement de sortie 8A et 8'A. Comme on le voit sur la figure 3, l'arbre d'entraînement de sortie 8A du réducteur 8, est accouplé avec un arbre de sortie 9 qui est lui-même accouplé par l'intermédiaire d'un accouplement 90 à la ligne d'arbre 4. Le groupe moteur secondaire est constitué par le moteur électrique 10 qui est constitué d'un stator 100 et d'un rotor 101. Le stator 100 repose par l'intermédiaire de supports élastiques 11 sur la structure 110 du navire. Ces supports élastiques 11 sont des supports élastiques à grand débattement qui sont adaptés pour pouvoir absorber les effets de chocs violents sur le navire ou sur la ligne d'arbre du navire. Le rotor 101 du moteur électrique est porté par un arbre d'entraînement creux 102 qui comporte un alésage axial 103 de diamètre suffisamment grand pour être traversé par l'arbre de sortie 9 du groupe moteur hybride. L'alésage 103 de l'arbre d'entraînement 102 du rotor du moteur électrique est dimensionné de façon à pouvoir supporter des mouvements relatifs de l'arbre de sortie 9 par rapport au moteur pouvant résulter des effets d'un choc violent sur le navire. L'arbre creux 102 du rotor du moteur électrique est accouplé à l'une de ses extrémités à l'arbre de sortie 9 du groupe moteur hybride par l'intermédiaire d'un accouplement élastique 12 et l'arbre d'entraînement de sortie 8A du réducteur 8, est accouplé avec l'arbre de sortie 9 par un moyen 12A débrayable.

Avec cette disposition, le groupe moteur secondaire 10 est disposé en aval du groupe moteur principal entre le réducteur 8 et la butée 6 de reprise de l'effort de poussée de l'hélice, de telle sorte qu'il n'augmente pas l'encombrement de la ligne de propulsion du navire. En effet, dans cette disposition, il n'est pas nécessaire d'allonger la ligne d'arbre pour pouvoir y implanter le groupe moteur secondaire. En outre dans cette disposition, dans laquelle le groupe moteur secondaire est accouplé en parallèle avec le groupe moteur principal, la liaison élastique 12 du groupe moteur secondaire 10 avec l'arbre de sortie 9 n'a pas besoin d'être dimensionnée pour pouvoir reprendre toute la puissance du groupe moteur principal. Cette liaison peut être dimensionnée simplement pour être capable de reprendre la puissance du groupe moteur secondaire. En outre, dans cette disposition, le groupe moteur secondaire étant couplé de façon élastique d'une part avec la structure du navire d'autre part avec la ligne d'arbre, le groupe moteur secondaire n'a pas besoin d'être spécialement dimensionné pour pouvoir résister à un choc violent sur le navire. En effet, les effets d'un choc violent sur le navire sont absorbés par les liaisons élastiques du groupe moteur secondaire d'une part avec la structure du navire et d'autre part avec la ligne d'arbre. En outre, si à la suite d'un choc, le groupe moteur principal a subi des détériorations, le groupe moteur secondaire peut être découplé du groupe moteur principal et continuer à entraîner la ligne d'arbre et assurer ainsi une propulsion de secours pour le navire. Enfin, avec le montage en parallèle du groupe moteur secondaire avec le groupe moteur principal, la liaison élastique entre le groupe moteur secondaire et l'arbre de sortie n'interfère pas avec le fonctionnement du groupe moteur principal de sorte que ce système a un comportement vibratoire satisfaisant. En particulier, ce montage évite qu'il y ait des problèmes de résonance entre le groupe moteur principal et le groupe moteur secondaire.

Ce montage tel qu'il vient d'être décrit a l'avantage de permettre d'utiliser comme groupe moteur secondaire des moteurs électriques classiques qui se différencient simplement des moteurs électriques utilisés pour d'autres applications par le fait que le diamètre de l'arbre central a été augmenté et que cet arbre comporte un alésage de dimension suffisante.

Dans le mode de réalisation qui vient d'être décrit et qui est un mode de réalisation préféré, l'arbre de sortie et le groupe moteur secondaire sont coaxiaux ce qui a l'avantage de réduire sensiblement l'encombrement de l'ensemble. Mais l'homme de métier comprendra que d'autres montages sont possibles. En particulier, le groupe moteur secondaire peut être disposé à côté de l'arbre de sortie 9, et accouplé à cet arbre de sortie par un dispositif élastique par exemple du type comportant des courroies et des poulies.

## Revendications

1. Groupe moteur (3) pour l'entraînement d'au moins une ligne d'arbres d'une ligne de propulsion d'un navire, du type comprenant un groupe moteur principal (7), au moins un groupe moteur secondaire (10, 10') et au moins un arbre de sortie (9, 9') accouplé au groupe moteur principal (7) et à un groupe moteur secondaire (10, 10'), **caractérisé en ce que** le groupe moteur principal (7) et un groupe moteur secondaire (10, 10') accouplés à un arbre de sortie (9, 9'), sont accouplés en parallèle, le groupe moteur principal étant accouplé par l'intermédiaire d'un moyen d'accouplement débrayable (12A) et le groupe moteur secondaire étant accouplé par l'intermédiaire d'un moyen d'accouplement élastique (12, 12').

2. Groupe moteur (3) selon la revendication 1, **caractérisé en ce que** le groupe moteur secondaire (10) comprend un arbre d'entraînement (102) comportant un alésage axial (103) de diamètre interne supérieur au diamètre externe de l'arbre de sortie (9), **en ce que** l'arbre de sortie (9) est coaxial à l'arbre d'entraînement et s'étend à l'intérieur de l'alésage de l'arbre d'entraînement, et **en ce que** le moyen d'accouplement élastique (12) du groupe moteur secondaire et de l'arbre de sortie est monté à l'une des extrémités de l'arbre d'entraînement (102) du groupe moteur secondaire.

3. Groupe moteur (3) selon la revendication 1 ou la revendication 2, **caractérisé en ce que** le groupe moteur secondaire (10) est monté sur un dispositif de suspension élastique (11) et **en ce que** le diamètre intérieur de l'alésage axial (103) de l'arbre d'entraînement (102) du groupe moteur secondaire est adapté pour laisser entre l'arbre de sortie (9) et l'arbre d'entraînement (102) un jeu supérieur ou égal au débattement du dispositif de suspension.

4. Groupe moteur (3) selon l'une quelconque des revendications 1 à 3, **caractérisé en ce que** le groupe moteur secondaire (10) comprend au moins un moteur électrique et **en ce que** l'arbre d'entraînement (102) du groupe moteur secondaire constitue l'axe de rotation du moteur électrique.

5. Groupe moteur (3) selon l'une quelconque des revendications 1 à 4, **caractérisé en ce que** l'accouplement débrayable (12A) du groupe moteur principal (7) à l'arbre de sortie (9) est disposé entre le groupe moteur principal (7) et l'accouplement élastique (12) du groupe moteur secondaire (10) et de l'arbre de sortie (9).

6. Groupe moteur (3) selon l'une quelconque des revendications 1 à 5, **caractérisé en ce qu'**il comprend deux arbres de sortie (9, 9') accouplée en parallèle au groupe moteur principal (7) et accouplés chacun à un groupe moteur secondaire (10,10').

7. Navire équipé d'un groupe moteur selon l'une quelconque des revendications 1 à 6.

8. Navire selon la revendication 7, **caractérisé en ce qu'**il est à usage militaire.

## Claims

1. Power unit (3) for driving at least one line of shafts of a propulsion line of a ship, of the type comprising a main power unit (7), at least one secondary power unit (10, 10') and at least one output shaft (9, 9') which is coupled to the main power unit (7) and to a secondary power unit (10, 10'), **characterised in that** the main power unit (7) and a secondary power unit (10, 10') coupled to an output shaft (9, 9') are coupled in parallel, the main power unit being coupled by means of a disengagable coupling means (12A) and the secondary power unit being coupled by means of a resilient coupling means (12, 12').

2. Power unit (3) according to claim 1, **characterised in that** the secondary power unit (10) comprises a drive shaft (102) comprising an axial hole (103) having an internal diameter which is greater than the external diameter of the output shaft (9), **in that** the output shaft (9) is coaxial with the drive shaft and extends inside the hole of the drive shaft, and **in that** the resilient coupling means (12) of the secondary power unit and the output shaft is mounted at one of the ends of the drive shaft (102) of the secondary power unit.

3. Power unit (3) according to claim 1 or claim 2, **characterised in that** the secondary power unit (10) is mounted on a resilient suspension device (11) and **in that** the internal diameter of the axial hole (103) of the drive shaft (102) of the secondary power unit is suitable for leaving between the output shaft (9) and the drive shaft (102) a clearance which is greater than or equal to the clearance of the suspension device.

4. Power unit (3) according to any one of claims 1 to 3, **characterised in that** the secondary power unit (10) comprises at least one electric motor and **in that** the drive shaft (102) of the secondary power unit constitutes the axis of rotation of the electric motor.

5. Power unit (3) according to any one of claims 1 to 4, **characterised in that** the disengagable coupling (12A) of the main power unit (7) to the output shaft (9) is arranged between the main power unit (7) and the resilient coupling (12) of the secondary power unit (10) and the output shaft (9).

6. Power unit (3) according to any one of claims 1 to 5, **characterised in that** it comprises two output shafts (9, 9') which are coupled in parallel to the main power unit (7) and which are each coupled to a secondary power unit (10, 10').

7. Ship which is provided with a power unit according to any one of claims 1 to 6.

8. Ship according to claim 7, **characterised in that** it is for military use.

## Patentansprüche

1. Antriebsgruppe (3) zum Antreiben mindestens eines Wellenstrangs eines Antriebsstrangs eines Schiffs, des Typs, der aufweist: eine Hauptantriebsgruppe (7), mindestens eine sekundäre Antriebsgruppe (10, 10'), und mindestens eine Ausgangswelle (9, 9'), die mit der Hauptantriebsgruppe (7) und mit einer sekundären Antriebsgruppe (10, 10') gekuppelt ist, **dadurch gekennzeichnet, dass** die Hauptantriebsgruppe (7) und eine sekundäre Antriebsgruppe (10, 10'), die mit einer Ausgangswelle (9, 9') gekuppelt sind, parallel gekuppelt sind, wobei die Hauptantriebsgruppe mittels eines ausrückbaren Kupplungsmittels (12A) gekuppelt ist und die sekundäre Antriebsgruppe mittels eines elastischen Kupplungsmittels (12, 12') gekuppelt ist.

2. Antriebsgruppe (3) gemäß Anspruch 1, **dadurch gekennzeichnet, dass** die sekundäre Antriebsgruppe (10) eine Antriebswelle (102) aufweist, die eine Axialbohrung (103) mit einem Innendurchmesser aufweist, der größer als der Außendurchmesser der Ausgangswelle (9) ist, dass die Ausgangswelle (9) koaxial zu der Antriebswelle ist und sich im Inneren der Bohrung der Antriebswelle erstreckt, und dass das elastische Kupplungsmittel (12) der sekundären Antriebsgruppe und der Ausgangswelle an einem der Enden der Antriebswelle (102) der sekundären Antriebsgruppe montiert ist.

3. Antriebsgruppe (3) gemäß Anspruch 1 oder Anspruch 2, **dadurch gekennzeichnet, dass** die sekundäre Antriebsgruppe (10) an einer elastischen Federungsvorrichtung (11) montiert ist und dass der Innendurchmesser der Axialbohrung (103) der Antriebswelle (102) der sekundären Antriebsgruppe angepasst ist, um zwischen der Ausgangswelle (9) und der Antriebswelle (102) ein Spiel zu lassen, das größer oder gleich dem Federweg der Federungsvorrichtung ist.

4. Antriebsgruppe (3) gemäß irgendeinem der Ansprüche 1 bis 3, **dadurch gekennzeichnet, dass** die sekundäre Antriebsgruppe (10) mindestens einen Elektromotor aufweist, und dass die Antriebswelle (102) der sekundären Antriebsgruppe die Rotationsachse des Elektromotors bildet.

5. Antriebsgruppe (3) gemäß irgendeinem der Ansprüche 1 bis 4, **dadurch gekennzeichnet, dass** die ausrückbare Kupplung (12A) der Hauptantriebsgruppe (7) an der Ausgangswelle (9) zwischen der Hauptantriebsgruppe (7) und der elastischen Kupplung (12) der sekundären Antriebsgruppe (10) und der Ausgangswelle (9) angeordnet ist.

6. Antriebsgruppe (3) gemäß irgendeinem der Ansprüche 1 bis 5, **dadurch gekennzeichnet, dass** sie zwei Ausgangswellen (9, 9') aufweist, die parallel zu der Hauptantriebsgruppe (7) gekuppelt sind und jeweils mit einer sekundären Antriebsgruppe (10, 10') gekuppelt sind.

7. Schiff, das mit einer Antriebsgruppe gemäß irgendeinem der Ansprüche 1 bis 6 ausgestattet ist.

8. Schiff gemäß Anspruch 7, **dadurch gekennzeichnet, dass** es zum militärischen Gebrauch bestimmt ist.
